# EUROPEAN PATENT APPLICATION

(11) **EP 1 571 744 A1**
(43) Date of publication of application: **07.09.2005**
(21) Application number: 05004170.6
(22) Date of filing: 25.02.2005
(51) Int. Cl.: H02G 3/08

(54) **Electric user modular box including a segregated and separated passage for the user electric and signal cables**

(30) Priority: 01.03.2004 IT MI20040372
(71) Applicant: CANALPLAST S.P.A., 20124 Milano (IT)
(72) Inventor: Villi, Piergiorgio, 20124 Milano (IT)
(74) Representative: Cicogna, Franco

(57) **Abstract**

The present invention relates to an electric user modular box (1) including a segregated and separated passage for the user electric and signal cables, comprising, in a space delimited by a box cover (2), a bottom (3) thereon a partition element (10) for segregating different user cables can be arranged.

A locating, extension and separating fitting (20) is moreover provided, for interconnecting different user boxes.

## Description

### BACKGROUND OF THE INVENTION

The present invention relates to an electric user modular box including a segregated and separated passage for the user electric and signal cables.

As is known, a very important problem to be solved in making modular boxes for electric system in general, is that of holding a set segregation and separation of the different users, so as to prevent power users and signal users from being arranged in an adjoining relationship.

Prior solutions for solving the above mentioned problems have not been found as fully satisfactory, since the cable separation would involve a use of very complex and difficult to be installed constructions, which negatively affect the cost of the systems to be made.

### SUMMARY OF THE INVENTION

Accordingly, the aim of the present invention is to overcome the above mentioned drawbacks, by providing an electric user modular box, including a segregated and separated passage for the cables of the different electric users, allowing, starting from a single element constituted by said modular box, to provide a plurality of discrete zones which can be easily segregated for the different electric users.

Within the scope of the above mentioned aim, a main object of the present invention is to provide such a modular box construction allowing to perform, depending on requirements, a connection of several boxes, while holding a perfectly separated relationship between the different users.

Yet another object of the present invention is to provide such a modular box which, owing to its specifically designed constructional features, is very reliable and safe in operation.

Yet another object of the present invention is to provide such a user modular box which can be easily made and which, moreover, is very competitive from a mere economic standpoint.

According to one aspect of the present invention, the above mentioned aim and objects, as well as yet other objects, which will become more apparent hereinafter, are achieved by an electrically user modular box including a segregated and separated passage for the user electric and signal cables, characterized in that said box comprises, in a space delimited by a box cover, a bottom thereon a partition member can be arranged for segregating different user cables, and, moreover, said box further comprising a locating, extension and continuity fitting adapted to allow the cables to be held in a separated condition, for intercoupling different user boxes.

### BRIEF DESCRIPTION OF THE DRAWINGS

Further characteristics and advantages of the present invention will become more apparent hereinafter from the following detailed disclosure of a preferred, though not exclusive, embodiment of an electric user modular box, including a segregated and separated passage for the different user electric and signal cables, which is illustrated, by way of an indicative, but not limitative, example in the accompanying drawings, where:

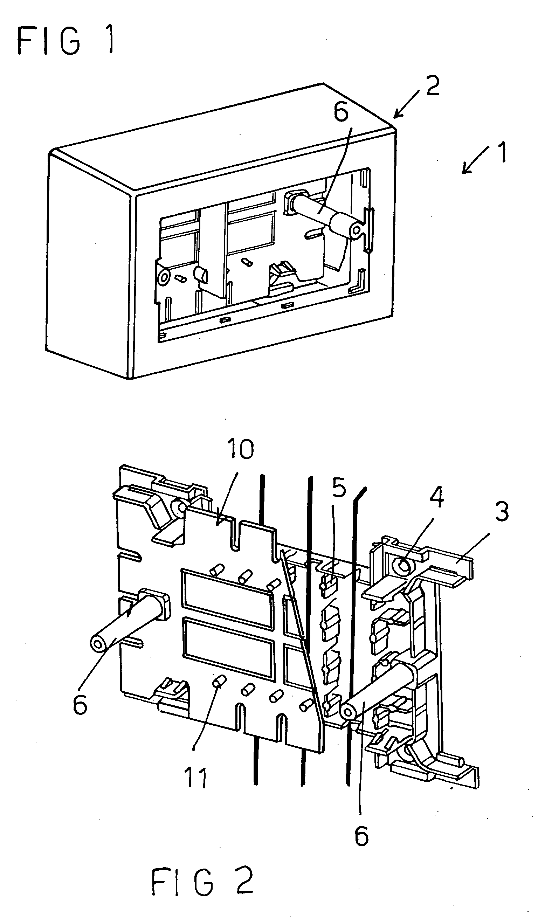

Figure 1 is a schematic perspective view illustrating the modular box according to the present invention;
Figure 2 is an exploded view illustrating the modular box according to the invention;

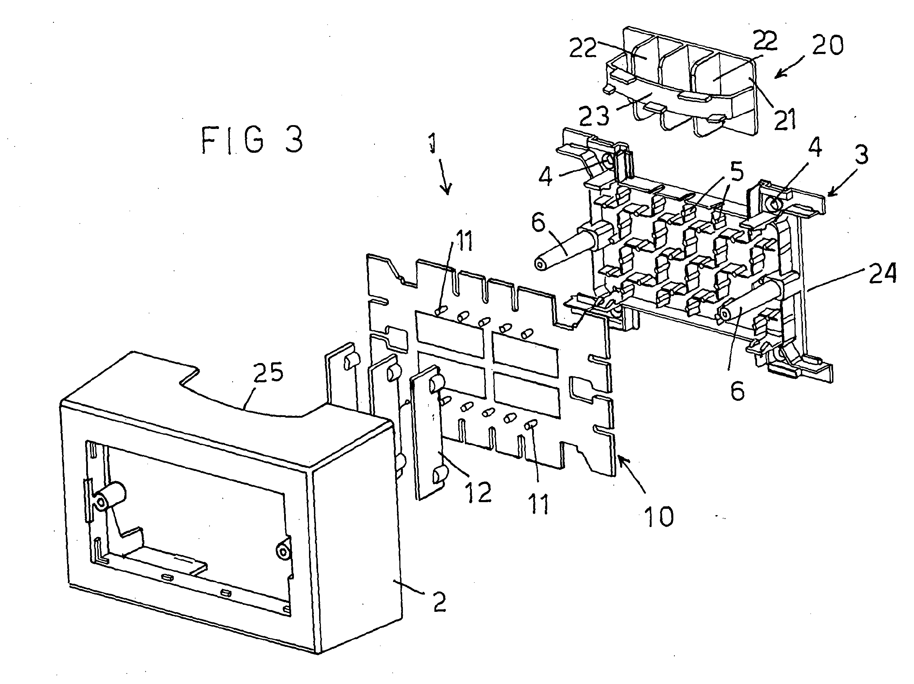

Figure 3 is a further exploded view illustrating a detail of the bottom and partition member of the subject box;
Figure 4 shows the connection to a channel having discrete users, of a first user;
Figure 5 shows a connection, through the subject modular box, according to the invention, of two discrete users coming from a same channel;

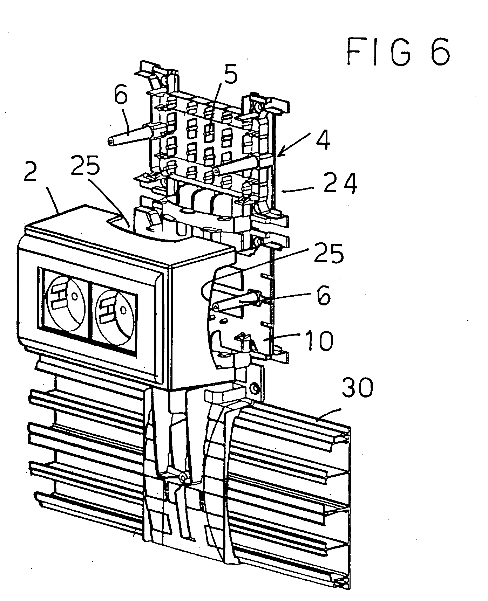

Figure 6 is a perspective view illustrating the coupling of the box cover adjoining a channel; and
Figure 7 shows a possible coupling type, with different users deriving from a same channel.

### DESCRIPTION OF THE PREFERRED EMBODIMENTS

With reference to the number references of the above mentioned figures, the electric user modular box including a segregated and separated passage for the user electric and signal cables, according to the invention, which has been generally indicated by the reference number 1, comprises a box cover, generally indicated by the reference number 2, which is overlapped on a bottom 3, including a plurality of throughgoing holes 4 for affixing it to a wall.

More specifically, the bottom 3 of the box comprises tilting walls 5, allowing to easily define the cable path.

From said bottom 3 peg elements 6 extend, in which can be engaged fixing screws for fixing the box cover 2.

On said bottom 3, moreover, a partition element 10 can be overlapped, said partition element including a plate element allowing the possibility of separating, inside the modular box construction, two discrete zones for different users.

On the partition element 10 are moreover provided a plurality of pins 11 allowing a coupling of fin or wing separating elements 12 which practically define passage cable vias or channels, thereby allowing to obtain an ordered location.

A very important element or feature of the invention is that a locating, extension and continuity fitting 20 is moreover provided, for intercoupling in a well separated manner, adjoining modular boxes for different users, which fitting element comprises a base or bottom plate 21, supporting separating elements 22, connected by a bridge element 23 adapted to be housed in a recess 24 of the bottom and which can be further engaged in a corresponding cut-out 25 defined on the box body to allow different modular boxes to be arranged in an adjoining relationship and easily coupled.

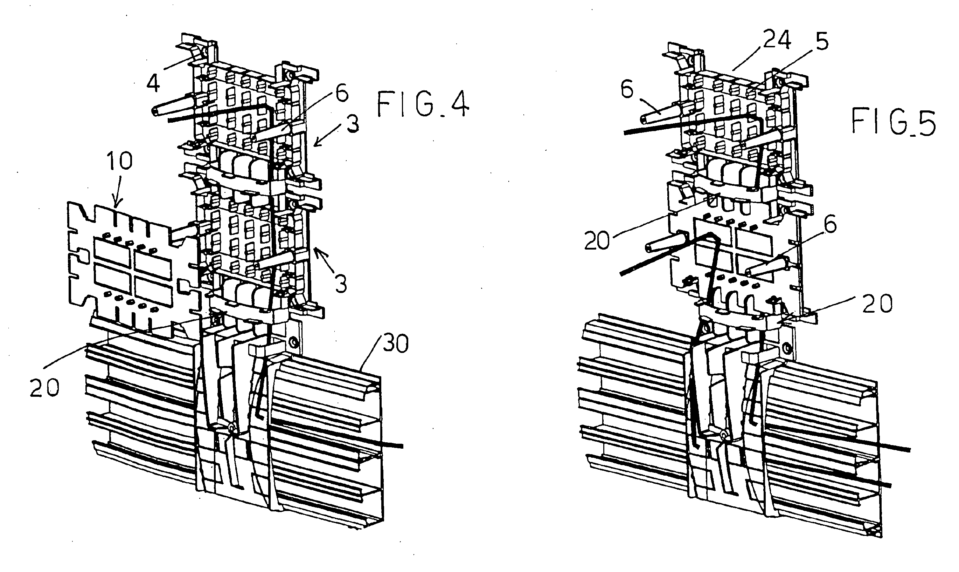

With reference to figure 4, is herein shown an embodiment in which, starting from a channel 30 defining separated zones for the passage of different users, a first cable is taken, for example a signal cable, which is caused to pass, through the fitting 20, above the bottoms 3 of two adjoining modular elements.

On the modular element arranged near the channel, a partition element 10 is overlapped, and being moreover possible to provide a further user, for example of an electric or power type, to be arranged above said partition element and, accordingly, perfectly separated from the other signal user.

Thus, it is possible to apply two covers with the connection of the different users, starting from the same channel.

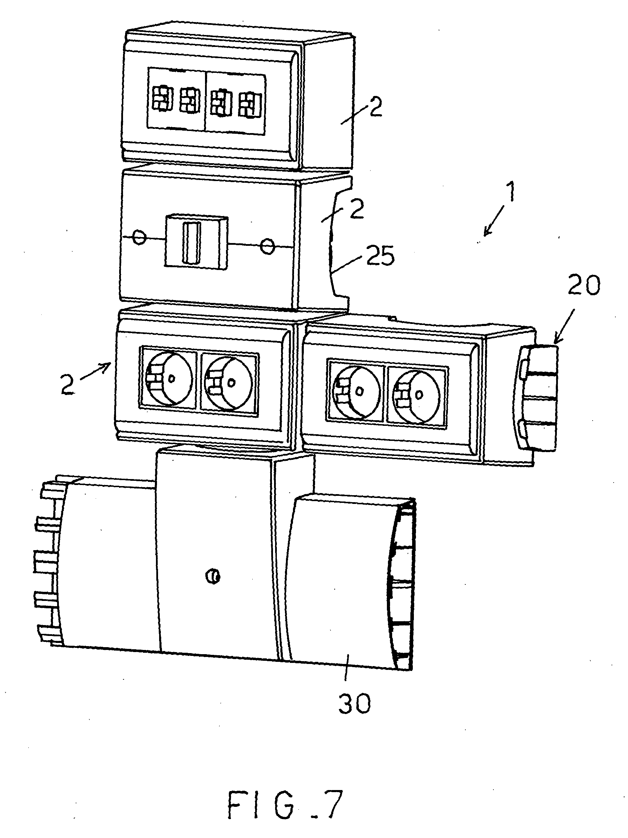

The connection possibilities are very different and, as is shown in figure 7, the adjoining relationship can be made both in a vertical direction and in a horizontal direction, always using the locating fitting 20, allowing to easily connect two different user boxes, while holding them in a perfectly separated condition.

From the above disclosure it should be apparent that the invention fully achieves the intended aim and objects.

In particular, the fact is to be pointed out that the invention has provided a modular box which, by few very simple elements, allows to interconnect different user cables, while holding the cables in a perfectly separated and segregated condition.

The invention, as disclosed, is susceptible to several modifications and variations, all of which will come within the scope of the invention.

Moreover, all the constructional details can be replaced by other technically equivalent elements.

In practicing the invention, the used materials, and the contingent size and shapes, can be any, depending on requirements.

## Claims

1. An electrically user modular box including a segregated and separated passage for the user electric and signal cables, **characterized in that** said box comprises, in a space delimited by a box cover, a bottom thereon a partition member can be arranged for segregating different user cables, and, moreover, said box further comprising a locating, extension and continuity fitting adapted to allow the cables to be held in a separated condition, for intercoupling different user boxes.

2. A modular box, according to the preceding claim, **characterized in that** said bottom comprises throughgoing holes for allowing clamping means for coupling to a wall said bottom to pass therethrough.

3. A modular box, according to the preceding claims, **characterized in that** said box comprises moreover peg elements extending from said bottom and defining an engagement seat for screw elements for clamping said box cover.

4. A modular box, according to one or more of the preceding claims, **characterized in that** said modular box comprises moreover, on said bottom, tiltable walls for allowing cables to pass therethrough.

5. A modular box, according to one or more of the preceding claims, **characterized in that** said partition element comprises a plate body including a plurality of pins for clamping wing separating elements.

6. A modular box, according to one or more of the preceding claims, **characterized in that** said locating, extension and continuity fitting comprises a bottom plate, thereon a plurality of separating elements connected by a bridge are provided.

7. A modular box, according to one or more of the preceding claims, **characterized in that** said fitting is arranged in a cut-out defined by said bottom and being adapted to be housed in a corresponding recess defined on the sidewalls of the box cover.

8. A modular box, according to one or more of the preceding claims, **characterized in that** said modular box can be arranged near a channel defining segregated passages seats for a plurality of electric users.

9. An electric user modular box including a segregated and separated passage for the user electric and signal cables, according to one or more of the preceding claims, and substantially as broadly disclosed and illustrated, and for the intended aim and objects.
